# EUROPEAN PATENT SPECIFICATION

(11) **EP 3 911 463 B1**
(45) Date of publication and mention of the grant of the patent: **31.01.2024**
(21) Application number: 20706994.9
(22) Date of filing: 17.02.2020
(51) Int. Cl.: B22F 10/28, B22F 10/38, B22F 12/67, B22F 12/90, B29C 64/153, B29C 64/214, B29C 64/393, B33Y 10/00, B33Y 30/00, B33Y 50/02, G06N 3/08, G06N 20/10

(54) **METHOD OF DETECTING MALFUNCTION IN ADDITIVE MANUFACTURING**
VERFAHREN ZUR ERKENNUNG EINER FEHLFUNKTION IN DER GENERATIVEN FERTIGUNG
PROCÉDÉ DE DÉTECTION DE DYSFONCTIONNEMENT DANS LA FABRICATION ADDITIVE

(30) Priority: 18.03.2019 EP 19163484
(43) Date of publication of application: 24.11.2021
(73) Proprietor: Siemens Energy Global GmbH & Co. KG, 81739 München (DE)
(72) Inventor: BOGNER, Jan Pascal, 13357 Berlin (DE); RULE, David, 98118 Seattle, WA (US)
(86) International application number: PCT/EP2020/054005
(87) International publication number: WO 2020/187509

(56) References cited:
- US-A1- 2015 115 490
- US-A1- 2017 120 337
- US-A1- 2018 154 484
- Michael Mathieu Gerardus Caelers: "Study of in-situ monitoring methods to create a robust SLM process - Preventing collisions between recoater mechanism and part in a SLM machine", , 14 June 2017 (2017-06-14), XP055605126, Retrieved from the Internet: URL:https://pdfs.semanticscholar.org/5479/ 409f1d1aef90bf22af63e9d30e281fc25c94.pdf [retrieved on 2019-07-12]

## Description

The present invention relates to a method of detecting a malfunction or disruption in an additive manufacturing process, notably a powder-bed-fusion process for manufacturing metallic components. Further, an additive manufacturing process comprising said method of detection, a corresponding apparatus as well as an additive manufacturing device are provided.

Said malfunction relates to any incident, notably collision of parts of an additive manufacturing apparatus or device, notably a recoater or deposition apparatus, with a built-up structure.

Preferably, the component denotes a high-performance component, such as a component applied in power generation, aerospace or the automotive sector. The component may e.g. be a component of a turbo machine, e.g. in the flow path hardware of a gas turbine. The component may be made of a nickel-or cobalt-based superalloy, particularly a precipitation hardened alloy.

Additive powder-bed-fusion processes comprise e.g. selective laser melting (SLM) or selective laser sintering (SLS) or electron beam melting (EBM).

Additive manufacturing, particularly powder-bed-based methods for the layer-by-layer manufacturing of a component have proven to be useful and advantageous in the fabrication of prototypes or filigree or complex components, like functionally cooled components. Further, additive manufacture stands out for its short chain of process steps which in turn enables material economization and a particularly low lead time. Apparatuses or setups for such methods usually comprise a manufacturing or build platform on which the component is built layer-by-layer after the feeding of a layer of a powder or base material which may then be melted, e.g. by an energy beam, such as a laser, and subsequently solidified. The layer thickness is usually determined by a recoater that moves, e.g. automatically, over the powder bed and removes excess material from a manufacturing plane or build space. Typical layer thicknesses amount to between 20 µm and 40 pm. During the manufacture, said energy beam scans over the surface and melts the powder on selected areas which may be predetermined by a CAD-file according to the desired geometry of the component to be manufactured.

Said scanning or irradiation is preferably carried out in a computer-implemented way or via computer aided means, such as computer-aided-manufacturing (CAM) instructions, which may be present in the form of a dataset. Said dataset or CAM-file may be or refer to a computer program or computer program product.

A system for quality monitoring of additive manufacturing (AM) is e.g. described in EP 3 128 321 B1. Said system comprises an acoustic emission sensor configured to be attachable to an additive manufacturing substrate and to output a sensor signal indicative of acoustic vibrations received at the sensor. A sensor signal is to determine at least one characteristic of an additive manufacturing process, wherein the at least one characteristic of the additive manufacturing process includes an amount and/or a quality of at least one of a powder supply or an injection gas supply.

Another system for quality monitoring of additive manufacturing is described in US 2015/115490 A1.

During production of parts in additive manufacturing or 3D printing, particularly in laser powder-bed-fusion processes, collisions between a protruding structure and a recoater, such as a wiper, which distributes the powder on a manufacturing plane, are a major cause of process disruptions, part distortion and further issues which often lead to rejection of the component or part and/or to a waste of service time of "AM" devices or machines.

Up to now, there is currently no adequate or a priori solution for detection of possible (re)coater collisions. Rather, when a collision occurs, a force threshold between e.g. the recoater and an obstacle is detected, the manufacturing machine will - at best - stop the build job.

It is, thus, an object of the present invention to provide means for an improved failure or disruption detection in additive manufacturing (AM). With the given means, the rejection of AM-parts can be reduced and a waste of service or operation time of the AM devices can advantageously be prevented.

The mentioned object is achieved by the subject-matters of the independent claims. Advantageous embodiments are subjectmatter of the dependent claims.

An aspect of the present invention relates to a method of detecting malfunction, such as a mechanical disruption incident, in an additive (powder bed fusion) manufacturing process.

The method comprises acoustically monitoring the additive manufacturing process, such as with the aid of a microphone or acoustic sensor.

The method further comprises recording of an acoustic incident, such as a mechanical disruption, when said incident is or runs the risk to fall outside of a given tolerance range. Expediently, the incident is indicative for the malfunction. The tolerance range may define a range between safe boundaries for the incident, such as e.g. a range which, when an according incident is classified accordingly, would not lead to significant damage or destruction of an "AM-hardware" and would not cause any rejection or waste of an already solidified structure of the component.

The method further comprises classifying the incident according to its severity for the additive manufacturing process amongst several different nuances or categories.

In an embodiment, the method may further comprise a pre-classification of the incident which may be used to evaluate or assess if the incident or a corresponding signal actually falls inside or outside of the given tolerance range. To this effect, the pre-classification may be carried out during or prior to the classification of the incident as mentioned above.

The method further comprises defining of a measure to counteract the malfunction and/or the incident.

The term "malfunction" may denote either an actual manufacturing issue, such as a process error. At the same time, malfunction may denote only a minor disturbance which can still be corrected and/or counteracted during the process without any consequential damage.

As an advantage of the provided method, particularly of the possibility to counteract the malfunction, a dysfunction of an incident occurring during the additive manufacturing process can be corrected and the component or a structure thereof which was already established may be saved. Simultaneously, the whole build job and the service hours therefore were not spent in vain, but the manufacturing can be continued. In other words, there is no need to start the build job anew which, advantageously, safes valuable service time of the AM device. It is understood by a skilled person that a correct monitoring of the process and classification of the incident is crucial for the definition of an adequate measure to counteract the malfunction.

According to the invention, the incident is caused by a collision of a recoater or deposition apparatus of an additive manufacturing device with a further structure, such as an already established or built part of or for the component to be manufactured.

In an embodiment, the method is computer-implemented, i.e. fully or at least partially executed with the aid of a computer, computer program, computer program product, software or any data processing device.

Alternatively, the method may be implemented fully by hardware, such as by so-called field programmable gate arrays (FPGA).

According to the invention, the method comprises diagnosing or characterising the malfunction in that the incident is classified by severity, amongst several nuances or categories.

For instance, five different and preferably contiguous, nuances may be defined, wherein a first nuances (nuance 1) may denote an incident of lowest severity, e.g. an incident which would normally not cause any build failure or hardware damage. A fifth nuance (nuance 5) may, on the other hand, denote an incident of highest severity, e.g. an incident which would certainly cause damage of process hardware as well as rejection of the component. Instead of an embodiment with five nuances, any other number of nuances may be chosen.

A computer program product as referred to herein may relate to a computer program means constituting or comprising a storage medium like a memory card, a USB stick, a CD-ROM, a DVD or a file downloaded or downloadable from a server or network. Such product may be provided by a wireless communication network or via transfer of the corresponding information by the given computer program, computer program product or computer program means. A computer program product may include a non-transitory computer-readable storage medium, storing applications, programs, program modules, G-code, scripts, source code, program code, object code, machine code, executable instructions and/or the like. Such non-transitory computer-readable storage media include all computer-readable media (including volatile and nonvolatile media).

According to the invention, the method comprises an artificial intelligence, notably an artificial neural network which is applied in the monitoring, the classifying and/or the defining of the mentioned measure. Said artificial neural network may e.g. conduct one of the described method steps, such as the classification, by making use of so-called non-parametric statistics, so-called "support vector machines" or corresponding algorithms. Said functions or algorithms may be already (partly) established in the prior art or known to a person skilled in the related art. Making use of artificial neural networks in the presented invention allows, advantageously to significantly improve performance of the detection and opens up the possibility to predict an incident at a point in time, prior to its occurrence.

In an embodiment, a measure to counteract the malfunction is to delay or pause the exposure of a subsequent irradiation vector with an energy beam by a defined period of time based on the classification of the incident.

The term "subsequent" shall in this context denote an irradiation vector or tool path of an irradiation unit or energy beam for the manufacturing process, which pursues or follows a given irradiation vector during which the incident was detected or monitored. With the given pause or delay function, advantageously, a temporal energy input into the corresponding powder bed may be lowered or homogenised, such that a structure for the component is given or left more time to cool down, shrink and/or avoid a recoater collision for the next layer to be manufactured.

In an embodiment, a "hold-time" between different layers to be manufactured for the component is specified. This embodiment may as well prompt the structure to cool down or thermally shrink after the corresponding layer irradiation or solidification has just been finished.

Such delay or hold-time may e.g. be selected or defined as an adequate measure in order to counteract the malfunction of an incident which has been classified in nuance 2 or larger.

In an embodiment, a measure to counteract the malfunction is to change a speed of a recoater in the additive manufacturing process based on the classification of the incident, e.g. in order to reduce the force of impact between the recoater and the obstacle for example. Such speed of the recoater may e.g. be selected or defined as an adequate measure in order to counteract the malfunction of an incident which has been classified in nuance 3 or larger.

In an embodiment not covered by the claims, a measure to counteract the malfunction is to vary the energy put in the respective powder layer or manufacturing plane by an energy beam based on the classification of the incident, e.g. in order to avoid thermal expansion of the irradiated or solidified structure. Such variation of energy input may e.g. be selected are defined as an adequate measure in order to counteract the malfunction of an incident which has been classified in nuance 4 or larger.

In an embodiment, a measure to counteract the malfunction is to select a recoating direction of a recoater in the additive manufacturing process based on the classification of the incident. Control and selection of a recoating direction is e.g. accessible in current or state-of-the-art additive manufacturing devices. Such selection of the recoating direction may e.g. be chosen as an adequate measure in order to counteract the malfunction of an incident which has been classified in nuance 1 or larger.

In an embodiment, the recoating direction is chosen at least partly parallel to an overhang direction of a previously manufactured structure of the component to be manufactured.

When e.g. an overhang or protrusion or a main axis of extension thereof is aligned in a first direction, it is beneficial if also the recoating direction is chosen parallel to such direction as an impact of collision can be reduced in this way.

In an embodiment, the monitoring is carried out continuously, such as in a closed-loop manner, during the additive manufacturing process. According to this embodiment, a very accurate monitoring or detection can be carried out. Further, an incident malfunction can advantageously be detected in-situ and instantaneously in the manufacturing process. Consequently, a disruption and/or collision in the manufacturing process can be counteracted or corrected most expediently.

In an embodiment, the method comprises considering a camera record of an additive manufacturing plane or powder bed surface, such as an optical image of a built-in camera, in an additive manufacturing device for the classifying and/or the defining of the measure(s). According to this embodiment, the detection can be made more accurate, as the incident being acoustically detected, can be further validated or verified by optical sensor data.

A further aspect of the present invention relates to a method of manufacturing a component by powder-bed-fusion comprising the method as described above.

In an embodiment, the method of detection uses an artificial neural network, which is trained during the manufacturing process, such as trained in a closed-loop manner. As an advantage of this embodiment, the detection mechanisms can be steadily improved as the number of build jobs rises. By the given iterations, the artificial intelligence, or neural network gathers input by which it can improve detection accuracy and performance.

In an embodiment, a CAM- and/or irradiation parameter set for the manufacture of a subsequent component by additive powder bed fusion is adapted, such as an irradiation strategy varied, based on the trained neural network. This embodiment allows to account for or correct future build failures or incidents even during the build job preparation. In this way, collision risks can be fully prevented from the beginning. By this solution, the whole additive manufacturing route can be significantly improved. Such improvements are important and only enable a validation of additive processes for real industrial applications, such as commercial series production of high-performance components.

A further aspect of the present invention relates to an apparatus for detecting malfunction in an additive powder-bed-fusion manufacturing process comprising a microphone or acoustic emission sensor and a data processing unit or a computer. The apparatus is configured or adapted to an additive manufacturing device to conduct the method of detection as described above. Said apparatus further comprises an artificial intelligence program or module, notably an artificial neural network or corresponding program, which is coupled to said microphone or acoustic emission sensor.

A further aspect of the present invention relates to an additive manufacturing device comprising the apparatus as described.

Advantages and embodiments relating to the described method of detecting malfunction and/or the described method of additive manufacturing may as well pertain or be valid with regard to the described apparatus and/or device, or vice versa.

Further features, expediencies and advantageous embodiments become apparent from the following description of the exemplary embodiment in connection with the Figures.
- Figure 1: indicates in a schematic sectional view an additive powder-bed-fusion manufacturing process.
- Figure 2: indicates in a schematic flow chart, generic method steps of the present invention in an abstract way.
- Figure 3: indicates in a schematic flow chart, specific method steps of the present invention.
- Figure 4: indicates in a schematic perspective view, an apparatus and recoating operation in powder-bed-based additive manufacturing processes also indicating measures of the presented method.

Like elements, elements of the same kind and identically acting elements may be provided with the same reference numerals in the Figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

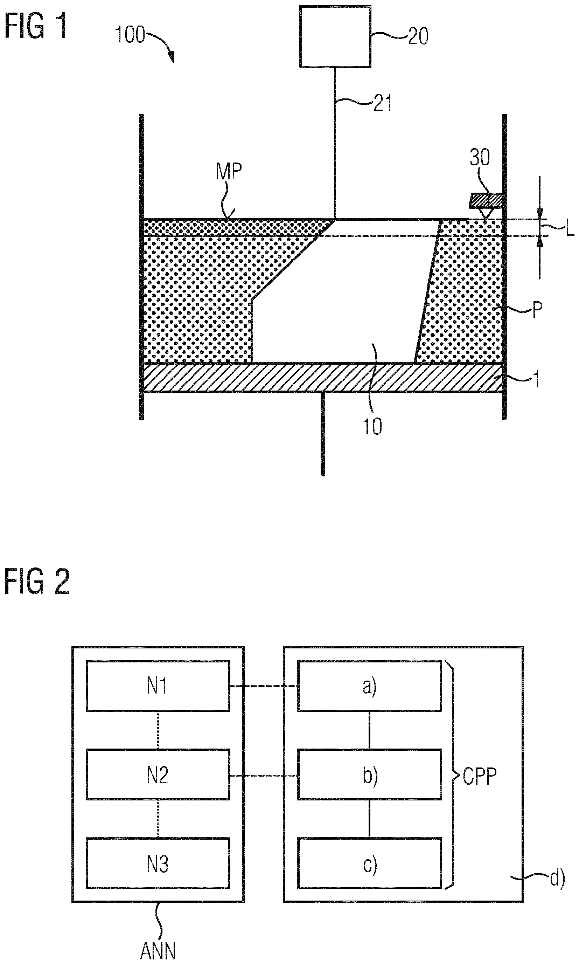

Figure 1 shows an additive manufacturing device 100. Said device 100 may, at least with respect to its basic building blocks, be a conventional device for manufacturing any type of components by powder-bed-fusion. Such techniques employ a bed of a powder or base material P which is selectively and layerwise exposed to or irradiated by an energy beam 21, such as a laser or an electron beam of an irradiation apparatus or energy beam source 20. Accordingly, the given powder-bed-fusion method may relate to selective laser sintering, selective laser melting or electron beam melting. Said processes have in common that the component (cf. reference numeral 10) is established or build up on top of a build platform 1. In other words, the component 10 is fused or welded onto said platform 1 and consecutively established by selectively solidifying the base material according to its predefined geometry which may be present in form of a CAD-file. After the irradiation or fusing of each layer (cf. reference numeral L), the build platform 1 is usually lowered according to the extent of a layer thickness and a new base material layer is deposited on a manufacturing plane MP via a deposition apparatus or recoater 30.

The component as referred to herein may particularly relate to a part or an article of complex shape, such as with filigree portions of structures. Preferably, said component 10 is made of a high-performance material, such as a material of great strength and/or thermal resistivity. Particularly, said part may constitute a part of a steam or gas turbine component, such as a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit kit. Alternatively, said component may relate to another or similar component.

Figure 2 shows a schematic flow chart indicating generic method steps according to the present invention. The method of the present invention is a method of detecting malfunction in an additive powder-bed-fusion manufacturing process as outlined in Figure 1.

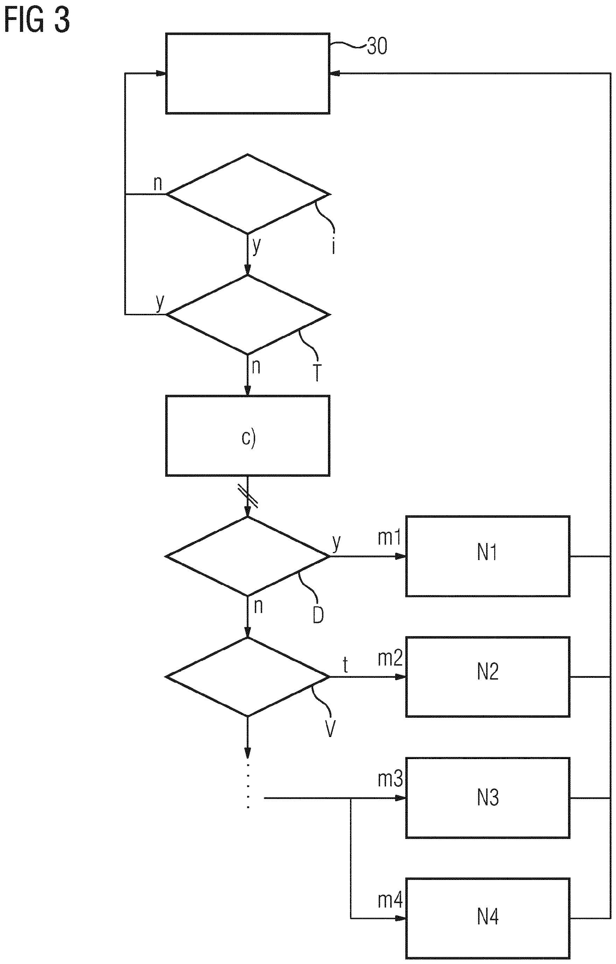

The method comprises, a), acoustically monitoring the additive manufacturing process and recording an acoustic incident i (cf. Figure 3) when said incident i is outside of a given tolerance or tolerance range (cf. numeral T below). Furthermore, the incident i is indicative for the mentioned malfunction.

The decision, whether said incident i, notably a mechanical disruption in the manufacturing process or a recoater collision or a corresponding sensor signal of the sensor having registered said incident i, lies inside or outside of said tolerance range is performed by a classification or control unit (not explicitly indicated).

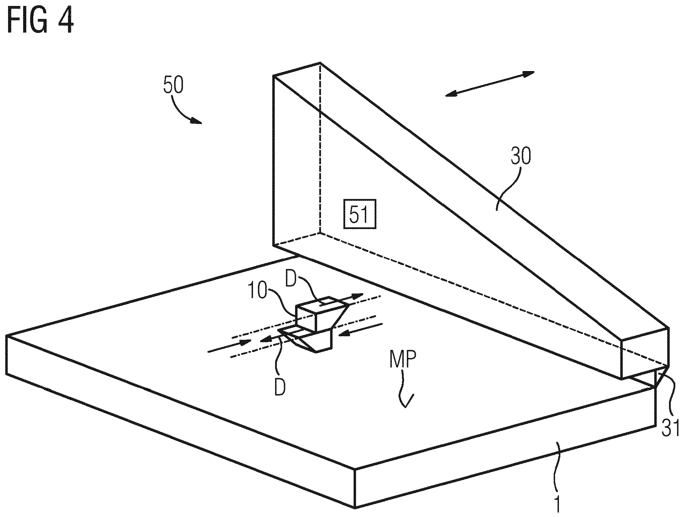

The mentioned incident i is caused by a collision of a recoater 30 (cf. recoater wiper or blade 31 in Figure 4) of an additive manufacturing device 100 or apparatus 50 with a further structure, such as an already established part of the component 10 to be additively manufactured.

The monitoring a) is preferably carried out continuously during the additive manufacturing process in order to allow for a very accurate and advantageous malfunction or disturbance detection.

The method further comprises, b), classifying the incident i, e.g. by the mentioned classification of control unit or an artificial intelligence program or module (cf. reference numeral ANN) .

Reference numeral CPP indicates in conjunction with the open brace that the method or single steps of it may be computer-implemented and at least partly conducted by a computer program or computer program product CPP.

Said classification b) comprises characterising the malfunction or incident, in that the incident i is classified amongst several categories or nuances N, such as N1, N2, N3, N4 and N5 as shown in the left part of Figure 2. Said nuances are indicated as comprised by or interacting with an artificial neural network ANN, which can be applied for the presented method, particularly for the monitoring and the classification of the incident i.

For instance, five different and preferably contiguous, nuances may be defined, wherein a first nuances (nuance 1) may denote an incident of lowest severity, e.g. an incident which would normally not cause any build failure or hardware damage. A fifth nuance (nuance 5) may, on the other hand, denote an incident of highest severity, e.g. an incident which would certainly cause damage of process hardware as well as rejection of the component (cf. also Figure 3 below).

Instead of five different contiguous nuances, any other expedient number and also overlapping nuances or categories are contemplated by the presented solution. For said classification by the artificial neural network, non-parametric statistics, support vector machines and regression analyses can be used, for example.

As indicated by reference numeral d), a method of additive manufacturing the component 10 using said method of detection is presented (cf. therefore Figure 1 along with its description).

It is further required by the present invention that the given method of additive manufacturing the component 10 and the method of detection malfunction or parts thereof are applied and/or implemented in the artificial neural network ANN (conducting one of the method steps a) to c). The artificial neural network ANN can e.g. be trained during a plurality of detection and/or manufacturing sequences. By any knowledge the artificial neural network may gather during multiple additive manufacturing processes, an accuracy of the malfunction detection or classification can advantageously be improved. Further, a CAM- or irradiation parameter set for the manufacture of a subsequent component (not explicitly indicated) by additive powder-bed-fusion may even be adapted in advance, such as an irradiation strategy varied, based on the trained neural network. This, advantageously, allows to account for any possible build issue or error already during preparation of a CAM-file for the manufacture.

Of course, the presented method of detection further comprises, c), defining of a measure m to counteract the malfunction or a predicted malfunction such that the manufacturing process can preferably be continued without any consequential issues.

Figure 3 indicates in a schematic flow chart rather specific method steps and/or measures to counteract the detected malfunction according to the present invention.

On the left side, a box 30 is shown indicating a recoating operation (cf. reference numeral 30 in Figure 1). When an according incident i or disturbance of an additive manufacture is detected as indicated in the next box on the right and indicated with "i", it can e.g. be decided whether said incident i falls outside or inside of a given tolerance T (cf. still next box to the right).

When there was no incident detected (as indicated by reference numeral "n" in box i), the result is negative and a recoating and/or manufacturing can be continued. When, however, an incident i is detected, it has to be checked whether it is within safe boundaries or tolerances T(as indicated by reference numeral "y" in box i).

Manufacturing and/or recoating can as well be continued when the detected incident i is e.g. "pre-"classified to be within the given tolerance range T (cf. "y" in box "T").

When, however, the incident i falls beyond the given tolerance T, (counter)measures have to be defined (cf. reference numeral c).

Said measures are indicated herein with numerals m1, m2, m3, and m4 (further ones not indicated for the sake of simplicity) .

For instance, when an incident i is classified within or among a nuance N1, a measure m1 may be defined or chosen. When an incident i is classified within or among a nuance N2, a measure m2 may be defined or chosen.

When an incident i is classified within or among a nuance N3, a measure m3 may be defined or chosen.

When an incident i is classified within or among a nuance N4, a measure m4 may be defined or chosen (cf. below).

Nuances and measures relate to a different severity of disturbance or malfunction in the additive manufacturing process beginning with index 1 onwards. An index 1 may, however, also denote that no further measures are inevitably needed for the additive manufacturing process to be continued in a proper way.

The box indicated with numeral D (cf. Figure 4 below) shall indicate in the given process sequence that it is assessed whether a double sided or bi-directional coating operation (back-and-forth movement for powder distribution in the device) is activated. If the result is yes (cf. "y"), a measure m1 may be defined. Measure m1 may be the disablement of a double-sided recoating operation or a selection of the recoating direction parallel e.g. to an overhang direction D of an additively established structure (cf. Figure 4 for more details).

If the result is no (cf. "n"), further evaluation may be needed, as indicated by box v and further boxes on the right in Figure 3.

Box v preferably indicates that thermal expansion of an additively built structure may have caused a recoater collision in the manufacturing process, and further measures, such as measures m2 to m4 may have to be defined, depending on the severity of malfunction.

A measure m2 may - for counteracting the malfunction - initiate or trigger the delay the exposure of a subsequent irradiation vector v with an energy beam 21 by a defined period t based on the classification of the incident i. Consequently, a built structure for the component 10 is left time to cool down and shrink so that consequential damage of the recoater, rejection of the part and/or abortion of the process can be prevented.

A measure m3 may - for counteracting the malfunction - initiate or trigger changing a speed of a recoater 30 in the additive manufacturing process based on the classification of the incident i.

Alternatively, a measure m4 may - for counteracting the malfunction - initiate or trigger defining a "hold-time" or delay between different layers in the manufacture or build job of the component 10.

A measure m4 not covered by the claims may - for counteracting the malfunction - initiate or trigger varying the energy put in the respective powder layer L by an energy beam 21 based on the classification of the incident i.

Further measures (not explicitly indicated) may as well be defined or chosen.

Figure 4 indicates in a schematic perspective view an apparatus 50 for additive manufacturing. Said apparatus 50 may be implemented or be an add-on part or kit for conventional additive manufacturing devices 100.

The apparatus 50 comprises a microphone or acoustic emission sensor 51 and a data processing unit CPP (see above). The apparatus 50 is configured to conduct the method of detecting malfunction as described above.

It is shown that the microphone 51 is installed at the recoater 30 which is the part of the device that is most prone to experience destruction during build jobs due to the frequent movement and small layer thicknesses in powder-bed-fusion.

The recoater 30 is, preferably, a bi-directional recoater.

The recoater 30 further comprises a blade or wiper 31 which can be used to distribute a new powder layer onto the manufacturing plane MP within the given additive manufacturing process.

As introduced in Figure 3, a measure m to counteract the malfunction may be to select a recoating direction of a recoater 30 in the additive manufacturing process based on the classification of the incident i. The recoating direction (cf. arrows in Figure 4) may e.g. be chosen to be at least partly parallel to an overhang direction D of a previously manufactured structure of the component 10 to be manufactured. This reduces the risk of destructive collisions between the additive manufactured structure 10 and the recoating blade 31. For the presented method steps to be carried out in an even more accurate way, the presented method of detection malfunction may comprise considering a camera record of a manufacturing plane MP, such as an optical image of a built-in camera, in an additive manufacturing device 100 for the classifying and/or the defining of the respective measure.

The scope of protection of the invention is not limited to the examples given hereinabove. The invention is embodied in each novel characteristic and each combination of characteristics, which particularly includes every combination of any features which are stated in the claims, even if this feature or this combination of features is not explicitly stated in the claims or in the examples.

## Claims

1. Method of detecting malfunction in an additive powder-bed-fusion manufacturing process comprising:
- a) monitoring the additive manufacturing process and recording an acoustic incident (i), when said incident (i) is outside of a given tolerance range, wherein the incident is indicative for the malfunction, wherein the incident (i) is caused by a collision of a recoater (30) of an additive manufacturing device (100) with a further structure, such as an already established part of the component (10) to be additively manufactured,
- b) classifying the incident (i) according to its severity for the additive manufacturing process amongst several different nuances or categories, and
- c) defining of a measure (m) based on the classification of the incident (i) to counteract the malfunction selected from:
- delaying the exposure of a subsequent irradiation vector (v) with an energy beam (21) by a defined period (t),
- changing a speed of a recoater (30) in the additive manufacturing process, or
- selecting a recoating direction of a recoater (30) in the additive manufacturing process, and wherein the method further comprises an artificial neural network, ANN, as an artificial intelligence which is applied in the monitoring, the classifying and/or the defining of the measure.

2. Method according to claim 1, wherein the method is computer-implemented and comprises characterising the malfunction, in that the incident is classified amongst several nuances (N1, N2).

3. Method according to one of the previous claims, wherein the recoating direction is chosen at least partly parallel to an overhang direction (D) of a previously manufactured structure of the component (10) to be manufactured.

4. Method according to one of the previous claims, wherein the monitoring is carried out continuously during the additive manufacturing process.

5. Method according to one of the previous claims, comprising considering a camera record of a manufacturing plane, such as an optical image of a built-in camera, in an additive manufacturing device for the classifying and/or the defining of the measure (m).

6. Method of additive manufacturing (d) a component (10) by powder-bed-fusion comprising the method of detection malfunction according to one of the previous claims, wherein the method of detecting uses an artificial neural network, ANN, which is trained during the manufacturing process.

7. Method according to claim 7, wherein a CAM- or irradiation parameter set for the manufacture of a subsequent component by additive powder-bed-fusion is adapted, such as an irradiation strategy varied, based on the trained neural network.

8. Apparatus (50) for detecting malfunction in an additive powder-bed-fusion manufacturing process comprising a microphone (51) and a data processing unit, CPP, wherein the apparatus (50) is configured to conduct the method of detecting of one of the previous claims.

9. Additive manufacturing device (100) comprising the apparatus of claim 8.

## Patentansprüche

1. Verfahren zum Detektieren einer Fehlfunktion in einem additiven Pulverbettverschmelzung-Herstellungsprozess, umfassend:
- a) Überwachen des additiven Herstellungsprozesses und Aufzeichnen eines akustischen Vorfalls (i), wenn der Vorfall (i) außerhalb eines gegebenen Toleranzbereichs liegt, wobei der Vorfall eine Fehlfunktion anzeigt, wobei der Vorfall (i) durch eine Kollision eines Wiederbeschichters (30) einer Additivherstellungsvorrichtung (100) mit einer weiteren Struktur verursacht wird, wie etwa einem bereits erstellten Teil der Komponente (10), die additiv hergestellt werden soll,
- b) Klassifizieren des Vorfalls (i) gemäß seiner Ernsthaftigkeit für den additiven Herstellungsprozess unter einigen unterschiedlichen Nuancen oder Kategorien, und
- c) Definieren einer Maßnahme (m) auf der Grundlage der Klassifizierung des Vorfalls (i), um der Fehlfunktion entgegenzuwirken, ausgewählt aus:
- Verzögern der Belichtung eines nachfolgenden Bestrahlungsvektors (v) mit einem Energiestrahl (21) um einen definierten Zeitraum (t),
- Ändern einer Geschwindigkeit eines Wiederbeschichters (30) in dem additiven Herstellungsprozess,
oder
- Auswählen einer Richtung eines Wiederbeschichters (30) in dem additiven Herstellungsprozess,
und,
wobei das Verfahren ferner ein künstliches neuronales Netz bzw. Artificial Neuronal Network, ANN, als eine künstliche Intelligenz, die beim Überwachen, dem Klassifizieren und/oder dem Definieren der Maßnahme angewandt wird, umfasst.

2. Verfahren nach Anspruch 1, wobei das Verfahren computerimplementiert ist und Charakterisieren der Fehlfunktion, in die der Vorfall unter einigen Nuancen (N1, N2) klassifiziert ist, umfasst.

3. Verfahren nach einem der vorhergehenden Ansprüche, wobei die Wiederbeschichtungsrichtung zumindest teilweise parallel zu einer Überhangrichtung (D) einer zuvor hergestellten Struktur der herzustellenden Komponente (10) ausgewählt wird.

4. Verfahren nach einem der vorhergehenden Ansprüche, wobei das Überwachen kontinuierlich während des additiven Herstellungsprozesses ausgeführt wird.

5. Verfahren nach einem der vorhergehenden Ansprüche, umfassend Berücksichtigen einer Kameraaufzeichnung einer Herstellungsebene, wie etwa einem optischen Bild einer eingebauten Kamera, in einer Additivherstellungsvorrichtung für das Klassifizieren und/oder das Definieren der Maßnahme (m).

6. Verfahren zum additiven Herstellen (d) einer Komponente (10) durch Pulverbettverschmelzung, umfassend das Verfahren zur Detektion nach einem der vorhergehenden Ansprüche, wobei das Verfahren zur Detektion ein künstliches neuronales Netz, ANN, verwendet, das während des Herstellungsprozesses trainiert wird.

7. Verfahren nach Anspruch 7, wobei ein CAM- oder Bestrahlungsparametersatz für die Herstellung einer nachfolgenden Komponente durch additive Pulverbettverschmelzung angepasst wird, so dass eine Bestrahlungsenergie auf der Grundlage des trainierten neuronalen Netzes variiert.

8. Einrichtung (50) zum Detektieren einer Fehlfunktion in einem additiven Pulverbettverschmelzung-Herstellungsprozess, umfassend ein Mikrofon (51) und eine Datenverarbeitungseinheit, CPP, wobei die Einrichtung (50) ausgelegt ist zum Durchführen des Verfahrens zum Detektieren nach einem der vorhergehenden Ansprüche.

9. Additivherstellungsvorrichtung (100), umfassend die Einrichtung nach Anspruch 8.

## Revendications

1. Procédé de détection d'un dysfonctionnement dans une opération de fabrication additive par fusion en lit de poudre comprenant :
- a) contrôler l'opération de fabrication additive et enregistrer un incident (i) acoustique, lorsque ledit incident (i) est en dehors d'une plage de tolérance donnée, dans lequel l'incident est indicateur du dysfonctionnement, dans lequel l'incident (i) est provoqué par une collision d'un regarnisseur (30) d'un dispositif (100) de fabrication additive avec une autre structure, telle qu'une partie déjà établie du composant (10) à fabriquer additivement,
- b) classer l'incident (i) suivant sa gravité pour l'opération de fabrication additive parmi plusieurs nuances ou catégories différentes, et
- c) définir une mesure (m) sur la base du classement de l'incident (i) pour s'opposer au dysfonctionnement choisie parmi :
- retarder l'exposition d'un vecteur (v) de rayonnement subséquent à un faisceau (21) d'énergie d'une durée (t) définie,
- changer une vitesse du regarnisseur (30) dans l'opération de fabrication additive,
ou
- sélectionner une direction de regarnissage d'un regarnisseur (30) dans l'opération de fabrication additive, et
dans lequel le procédé comprend en outre un réseau neuronal artificiel, ANN, comme intelligence artificielle, qui est appliquée dans le contrôle, le classement et/ou la définition de la mesure.

2. Procédé suivant la revendication 1, dans lequel le procédé est mis en œuvre par ordinateur et comprend caractériser le dysfonctionnement, en ce que l'incident est classé parmi plusieurs nuances (N1, N2).

3. Procédé suivant l'une des revendications précédentes, dans lequel on choisit la direction de regarnissage, au moins en partie parallèlement à une direction (D) de surplomb d'une structure fabriquée précédemment du composant (10) à fabriquer.

4. Procédé suivant l'une des revendications précédentes, dans lequel on effectue le contrôle en continu pendant l'opération de fabrication additive.

5. Procédé suivant l'une des revendications précédentes, comprenant prendre en considération un enregistrement par appareil photographique d'un plan de fabrication, tel qu'une image optique d'un appareil photographique intégré dans un dispositif de fabrication additive, pour le classement et/ou la définition de la mesure (m).

6. Procédé de fabrication (d) additive d'un composant (10) par fusion en lit de poudre comprenant le procédé de détection d'un dysfonctionnement suivant l'une des revendications précédentes, dans lequel le procédé de détection utilise un réseau neuronal artificiel, ANN, qui subit un apprentissage pendant l'opération de fabrication.

7. Procédé suivant la revendication 6, dans lequel on adapte un paramètre CAM ou d'exposition fixé pour la fabrication d'un composant subséquent par fusion additive en lit de poudre, tel qu'en faisant varier une stratégie d'exposition sur la base du réseau neuronal ayant subi l'apprentissage.

8. Equipement (50) de détection d'un dysfonctionnement dans une opération de fabrication additive par fusion en lit de poudre comprenant un microphone (51) et une unité de traitement de données, CPP, dans lequel l'équipement (50) est configuré pour effectuer le procédé de détection suivant l'une des revendications précédentes.

9. Dispositif (100) de fabrication additive comprenant l'équipement de la revendication 8.
